# EUROPÄISCHE PATENTANMELDUNG

(11) **EP 1 111 296 A2**
(43) Veröffentlichungstag der Anmeldung: **27.06.2001**
(21) Anmeldenummer: 00128172.4
(22) Anmeldetag: 21.12.2000
(51) Int. Cl.: F21S 9/00, F21V 23/04

(54) **Leuchtkörper und Beleuchtungssystem**

(30) Priorität: 22.12.1999 DE 19962100
(71) Anmelder: Säurle, Elisabeth, 83661 Lenggries (DE); Säurle, Siegfried, 83661 Lenggries (DE)
(72) Erfinder: Säurle, Elisabeth, 83661 Lenggries (DE); Säurle, Siegfried, 83661 Lenggries (DE)
(74) Vertreter: Müller, Thomas

(57) **Zusammenfassung**

Es wird ein Leuchtkörper (10) sowie ein Beleuchtungssystem beschrieben, mit einem Brennstoffzellensystem (20) zum Erzeugen elektrischer Energie und wenigstens einem mit dem Brennstoffzellensystem (20) elektrisch verbundenen Leuchtelement (11), wobei das Brennstoffzellensystem (20) wenigstens eine mit dem Leuchtelement (11) verbundene Brennstoffzelle (21) und einen, mit der wenigstens einen Brennstoffzelle (21) verbundenen Brennstoffspeicher (28) aufweist. Zum Ein- und Ausschalten des Leuchtelements (11) kann wenigstens ein Schalterelement (35) vorgesehen sein. Der Leuchtkörper (10) kann beispielsweise in Form einer Kerze ausgebildet sein, so daß das Beleuchtungssystem als Christbaumbeleuchtung verwendet werden kann.

## Beschreibung

Die vorliegende Erfindung betrifft einen Leuchtkörper sowie ein Beleuchtungssystem.

Leuchtkörper, insbesondere elektrische Leuchtkörper, sind in vielfältigen Ausführungsformen bekannt und werden auf verschiedenste Art und Weise eingesetzt. Beispielsweise können elektrisch betriebene Leuchtkörper in Form einer Kerze ausgebildet sein, wobei es sich in diesem Fall um sogenannte "elektrische Kerzen" handelt. Derartige elektrische Kerzen weisen in der Regel eine als Glühbirne ausgebildete Kerzenflamme auf, die in einen Kerzenschaft, der die Fassung trägt, eingeschraubt ist. Die einzelnen elektrischen Kerzen, die insbesondere als Christbaumschmuck dienen können, sind üblicherweise zu einem Beleuchtungssystem zusammengefaßt. Dazu sind die einzelnen elektrischen Kerzen über ein elektrisches Kabel sowohl untereinander, als auch mit einem Stecker verbunden. Über den Stecker, der in eine Steckdose eingesteckt wird, wird das Beleuchtungssystem und damit jede einzelne der elektrischen Kerzen mit elektrischer Energie versorgt.

Derartige Leuchtkörper und Beleuchtungssysteme weisen jedoch eine Reihe von Nachteilen auf. Insbesondere dann, wenn das Beleuchtungssystem als Christbaumschmuck verwendet wird, ist es auf Grund des die einzelnen elektrischen Kerzen verbindenden elektrischen Verbindungskabels schwierig, die elektrischen Kerzen im Christbaum zu positionieren, da insbesondere der Abstand der Kerze und damit die Kabellänge zwischen den Kerzen nicht variabel ist. Weiterhin ist das elektrische Verbindungskabel stets sichtbar, was dem mit dem Beleuchtungssystem geschmückten Christbaumschmuck ein unschönes Aussehen verleiht. Bei dem bekannten Beleuchtungssystem sind die einzelnen elektrischen Kerzen weiterhin in Reihe geschaltet. Das bedeutet, daß das gesamte Beleuchtungssystem ausfällt, wenn nur eine einzige der elektrischen Kerzen defekt ist. Nach dem Ausfall des Beleuchtungssystems wird das Auffinden der defekten elektrischen Kerze erschwert, insbesondere dann, wenn es sich um ein komplexes, eine große Anzahl von elektrischen Kerzen aufweisendes Beleuchtungssystem handelt.

Ausgehend vom bekannten Stand der Technik liegt der vorliegenden Erfindung die Aufgabe zu Grunde, einen Leuchtkörper sowie ein Beleuchtungssystem zu schaffen, mit dem die beschriebenen Nachteile vermieden werden können. Insbesondere soll jeder Leuchtkörper individuell und unabhängig von anderen Leuchtkörpern betrieben werden können. Weiterhin soll für die Leuchtkörper auf ein Verbindungskabel zu einem elektrischen Netz verzichtet werden können.

Diese Aufgabe wird gemäß dem ersten Aspekt der vorliegenden Erfindung gelöst durch einen Leuchtkörper, mit einem Brennstoffzellensystem zum Erzeugen elektrischer Energie und wenigstens einem mit dem Brennstoffzellensystem elektrisch verbundenen Leuchtelement, wobei das Brennstoffzellensystem wenigstens eine mit dem Leuchtelement verbundene Brennstoffzelle und einen mit der wenigstens einen Brennstoffzelle verbundenen Brennstoffspeicher aufweist.

Durch den erfindungsgemäßen Leuchtkörper können die zum Stand der Technik beschriebenen Nachteile umgangen werden. Ein großer Vorteil des erfindungsgemäßen Leuchtkörpers besteht darin, daß dieser nicht mehr von einer externen Energiequelle abhängig ist, so daß die bisher üblichen und erforderlichen Verbindungskabel entfallen können. Vielmehr wird die zum Betrieb des Leuchtkörpers benötigte elektrische Energie innerhalb des Leuchtkörpers selbst erzeugt.

Der erfindungsgemäße Leuchtkörper weist zwei Grundkomponenten auf. Bei der ersten Grundkomponente handelt es sich um das System zum Erzeugen elektrischer Energie. Bei der zweiten Grundkomponente handelt es sich um das Leuchtelement, das als Verbraucher der erzeugten elektrischen Energie ausgebildet ist. Die Erfindung ist nicht auf bestimmte Typen von Leuchtelementen beschränkt. Einige nicht ausschließliche Beispiele vorteilhafter Leuchtelemente sind im weiteren Verlauf der Beschreibung näher erläutert.

Das System zum Erzeugen elektrischer Energie ist erfindungsgemäß als Brennstoffzellensystem ausgebildet. Das Brennstoffzellensystem weist wenigstens eine Brennstoffzelle auf, die mit einem Brennstoffspeicher verbunden ist. Brennstoffzellen sind bereits bekannt. In einer Brennstoffzelle, beispielsweise einer PEM-Brennstoffzelle, wird durch eine chemische Reaktion Strom erzeugt. Dabei wird ein Brennstoff, wie beispielsweise Wasserstoff, und ein Oxidationsmittel, wie beispielsweise aus der Luft entnommener Sauerstoff, in elektrische Energie und ein Reaktionsprodukt, wie beispielsweise Wasser, umgewandelt. Eine Brennstoffzelle besteht im wesentlichen aus einem Anodenteil, einer Membran und einem Kathodenteil. Die Membran besteht aus einem gasdichten und protonenleitenden Material und ist zwischen der Anode und der Kathode angeordnet, um lonen auszutauschen. Auf der Seite der Anode wird der Brennstoff zugeführt, während auf der Seite der Kathode das Oxidationsmittel zugeführt wird. An der Anode werden durch katalytische Reaktionen Protonen, beziehungsweise Wasserstoffionen, erzeugt, die sich durch die Membran zur Kathode bewegen. An der Kathode reagieren die Wasserstoffionen mit dem Sauerstoff und es bildet sich Wasser. Die bei der Reaktion abgegebenen Elektronen lassen sich als elektrischer Strom durch einen Verbraucher leiten, beispielsweise das Leuchtelement des Leuchtkörpers.

Werden derartige Brennstoffzellen im Brennstoffzellensystem des Leuchtkörpers eingesetzt, dient der mit der Brennstoffzelle verbundene Brennstoffspeicher beispielsweise zur Speicherung von Wasserstoff.

Brennstoffzellensysteme verfügen in der Regel noch über eine weitere Anzahl unterschiedlicher Komponenten, die zum Starten (Hochfahren) und zum Betrieb des Brennstoffzellensystems erforderlich sind. So kann beispielsweise eine Starteinrichtung vorgesehen sein, über die das Brennstoffzellensystem gestartet wird. Weiterhin können verschiedene Heizeinrichtungen vorgesehen sein, die beispielsweise als Brenner, wie katalytische Brenner oder dergleichen, ausgebildet sein können. Über diese Heizeinrichtungen können die Brennstoffzelle(n) und die weiteren Komponenten des Brennstoffzellensystems, die für ihren Betrieb Wärme benötigen, auf Temperatur gebracht und auf der Betriebstemperatur gehalten werden. Da die Brennstoffzelle während des Betriebs Wärme und Wasser erzeugt, können entsprechende Kühlkreisläufe vorgesehen sein, um die in der Brennstoffzelle erzeugte Verlustwärme abzuführen. Weiterhin kann ein Auffangbehälter für das während des Brennstoffzellenbetriebs produzierte Prozeßwasser vorgesehen sein. Dieser Auffangbehälter kann vorzugsweise derart im Leuchtkörper angeordnet sein, daß er von Zeit zu Zeit entnommen und ausgeleert werden kann.

Oftmals ist Wasserstoff in Reinform zum Betreiben der Brennstoffzelle nicht vorhanden. Will man in einem solchen Fall die Brennstoffzelle mit einem leicht verfügbaren oder zu speichernden Kraftstoff (Ausgangsmaterial für den Brennstoff (Wasserstoff)) wie Erdgas, Methanol oder dergleichen betreiben, muß man den Kohlenwasserstoff in einer entsprechenden Vorrichtung zum Erzeugen/Aufbereiten des Brennstoffs zunächst in ein wasserstoffreiches Gas umwandeln. Diese Vorrichtung zum Erzeugen/Aufbereiten des Brennstoffs ist vorzugsweise zwischen dem Brennstoffspeicher und der Brennstoffzelle angeordnet. Sie kann eine Reihe von Reaktorelementen aufweisen, wie beispielsweise einen Verdampfer, einen Reformer und optional einen Shift-Reaktor und eine selektive Oxidation. Der Verdampfer dient zur Verdampfung des zumeist flüssigen Kraftstoffs. In dem Reformer, der dem Verdampfer nachgeschaltet ist, wird der verdampfte Kraftstoff zu Wasserstoff reformiert. Dem Verdampfer sowie dem Reformer müssen zum Betrieb Wärme zugeführt werden, was über entsprechend ausgestaltete Heizelemente erfolgen kann.

Wenn die Gehalte an für die Brennstoffzelle schädlichen Substanzen, beispielsweise Kohlenmonoxid-Gehalte, nach dem Reformieren noch zu hoch sind, können diese Gehalte im Shift-Reaktor reduziert werden. Anschließend kann der Brennstoff in der selektiven Oxidation feingereinigt werden.

Die vorliegende Erfindung kann für jede Art von Leuchtkörper eingesetzt werden, so daß sie nicht auf bestimmte Ausgestaltungsformen des Leuchtkörpers eingeschränkt ist. Ein bevorzugtes, jedoch nicht ausschließliches Beispiel wird im weiteren Verlauf der Beschreibung näher erläutert.

Vorteilhafte Ausführungsformen der Erfindung ergeben sich aus den Unteransprüchen.

Vorteilhaft kann der Brennstoffspeicher als geschlossener Behälter mit einer Zuleitung und einer Ableitung für den Brennstoff ausgebildet sein. Der Brennstoffspeicher kann vorzugsweise mit einer Feststoff-Füllung aus Carbon-Nanostrukturen versehen ist. Durch die Verwendung einer solchen Feststoff-Füllung kann die Speicherkapazität des Brennstoffspeichers vergrößert werden. Bei vielen Anwendungen, in denen gespeicherter Wasserstoff verwendet werden soll, kommt es nämlich darauf an, bei einem möglichst kleinen Speichervolumen und Speichergewicht des Brennstoffspeichers eine möglichst große Menge an Wasserstoff einspeichern zu können (möglichst hohe Speicherkapazität). Diese Forderung gilt insbesondere bei solchen Leuchtkörpern, die nur ein geringes Bauvolumen aufweisen. Zu nennen sind hier beispielsweise die bereits genannten elektrischen Kerzen.

Der Einsatz von Carbon-Nanostrukturen als Feststoff-Füllung in einem Brennstoffspeicher ist an sich bereits bekannt.

Der als geschlossener Behälter ausgebildete Brennstoffspeicher kann vorteilhaft als Druckbehälter ausgestaltet sein, da der im Brennstoffspeicher gespeicherte Brennstoff (Wasserstoff) üblicherweise unter erhöhtem Druck steht.

Vorzugsweise können die Teilchen der Carbon-Nanostrukturen zu größeren zusammenhängenden Konglomeraten mit gegenüber der Scheindichte der ursprünglich losen Teilchen erhöhter Scheindichte verdichtet sein. Der Vorteil einer Verdichtung zu solchen zusammenhängenden Konglomeraten liegt darin, daß durch die verdichtete Masse der Carbon-Nanostrukturen mehr Nanostrukturmaterial in den Brennstoffspeicher eingebracht werden kann, als dies durch einfaches Einfüllen der ursprünglich hergestellten Carbon-Nanostrukturteilchen möglich wäre. Als Scheindichte wird dabei das auf das jeweilige Volumen des Konglomerats bezogene Gewicht verstanden.

Vorzugsweise kann die wenigstens eine Brennstoffzelle als zylinderartig gewickelte Brennstoffzelle ausgebildet sein. Derartig ausgestaltete Brennstoffzellen haben den Vorteil, daß sie bei geringem Raumerfordernis dennoch eine große Leistungskapazität aufweisen. Zylinderartig gewickelte Brennstoffzellen sind an sich bereits bekannt und beispielsweise in der DE 197 39 019 beschrieben. Die in dieser Druckschrift beschriebenen Brennstoffzellen sind so aufgerollt, daß sie in Form eines Zylinders vorliegen. Die zylinderartig gewickelten Brennstoffzellen können sich unter Druck in einer äußeren, zylinderförmigen Hülse befinden. Auf diese Weise können Brennstoffzellen eine geometrische Form aufweisen, wie sie beispielsweise von herkömmlichen Batterien oder dergleichen bekannt ist.

Vorteilhaft kann das wenigstens eine Leuchtelement als Licht-Emittierende-Diode (LED) oder als Glühbirne ausgebildet sein. Dabei ist die Erfindung nicht auf die genannten Beispiele beschränkt, so daß auch andere Ausführungsformen für die Leuchtelemente denkbar sind.

Vorzugsweise kann zum Ein- und Ausschalten des Leuchtelements ein Schalterelement vorgesehen sein. Dieses Schalterelement ist vorzugsweise in einem elektrischen Kreis mit Brennstoffzelle und Leuchtelement vorgesehen. Durch Betätigung des Schalterelements kann das Leuchtelement wahlweise ein- oder ausgeschaltet werden, ohne daß dazu jeweils immer das gesamte Brennstoffzellensystem ein- beziehungsweise ausgeschaltet werden müßte. Die vorliegende Erfindung ist nicht auf bestimmte Ausgestaltungsformen für das Schalterelement beschränkt. Nachfolgend werden jedoch einige, nicht ausschließliche, Beispiel für geeignete Schalterelementtypen beschrieben.

Beispielsweise kann das Schalterelement als manuell zu betätigendes Schalterelement ausgebildet sein. Solche Schalterelemente können beispielsweise Kippschalter, Druckschalter oder dergleichen sein.

In anderer Ausgestaltung kann das Schalterelement als funkwellensensitives Schalterelement ausgebildet sein. Eine solche Ausgestaltung des Schalterelements hat den Vorteil, daß das Leuchtelement auch aus der Distanz ein- oder ausgeschaltet werden kann. Der Benutzer des Leuchtkörpers muß somit nicht zu dem Leuchtkörper hingehen, um diesen, wie bei manuell zu betätigenden Schalterelementen, ein- oder auszuschalten. Ein Beispiel eines solchen funkwellensensitiven Schalterelements sowie dessen Funktionsweise werden weiter unten im Hinblick auf das erfindungsgemäße Beleuchtungssystem näher beschrieben.

In anderer Ausgestaltung kann das Schalterelement als lichtsensitives Schalterelement ausgebildet sein. Dazu kann das Schalterelement allgemein einen Detektor aufweisen, der Licht, beispielsweise Umgebungslicht, auffängt und diese Lichtwerte in elektrische Signale umwandelt. Die elektrischen Signale betätigen dann das eigentliche Schalterelement. Beispielsweise kann das lichtsensitve Schalterelement derart ausgestaltet sein, daß der Detektor auf die Lichtstärke oder die Lichtfarbe reagiert. Wenn der Detektor auf die Lichtstärke reagiert, kann in diesem beispielsweise bei Unterschreiten einer vorgegebenen Lichtstärke (beispielsweise wenn es dunkel wird) ein elektrisches Signal generiert werden, worüber dann das Schalterelement betätigt wird, so daß sich der Leuchtkörper einschaltet.

Ebenso ist es möglich, daß das Schalterelement als akustiksensitives Schalterelement ausgebildet ist. Auch in diesem Fall kann das Schalterelement einen Detektor aufweisen, der auf Grund akustischer Signale ein elektrisches Signal erzeugt, über das dann das Schalterelement betätigt wird. Derartige Schalterelemente sind bereits aus dem Stand der Technik bekannt. Beispielsweise können akustiksensitive Schalterelemente durch Klatschen, Rufen, Singen, das Abspielen von Melodien oder dergleichen betätigt werden.

Es ist auch denkbar, daß das Schalterelement als Zeitschalter ausgebildet ist. Derartige Zeitschalter verfügen über eine Zeit-Einstelleinrichtung, in der eine gewünschte Zeit eingestellt beziehungsweise einprogrammiert werden kann. Wenn der eingestellte Zeitpunkt erreicht ist, wird das eigentliche Schalterelement betätigt, wodurch der Leuchtkörper entweder ein- oder ausgeschaltet wird.

Die einzelnen Schalterelemente können sowohl einzeln als auch in beliebiger Kombination im Leuchtkörper vorgesehen sein.

Vorteilhaft kann der Leuchtkörper in Form einer Kerze ausgebildet sein, wobei das Brennstoffzellensystem vorteilhaft im Kerzenschaft angeordnet ist und das Leuchtelement vorzugsweise in der oder als Kerzenflamme ausgebildet ist. Der Einsatz eines derart ausgebildeten Leuchtkörpers eignet sich besonders vorteilhaft überall dort, wo der Eindruck von Kerzen und Kerzenlicht erzeugt werden soll, die Verwendung echter Kerzen mit offenen Flammen jedoch unerwünscht oder zu gefährlich ist.

Besonders vorteilhaft können derartige elektrische Kerzen als Christbaumschmuck eingesetzt werden. Da die Erzeugung der für das Leuchtelement erforderlichen elektrischen Energie innerhalb der Kerze selbst erfolgt, ist eine Anbindung der elektrischen Kerze über ein Verbindungskabel an das elektrische Netz nicht erforderlich. Der als elektrische Kerze ausgebildete Leuchtkörper kann somit auf einfache Weise am beziehungsweise im Christbaum angeordnet werden, lästige Kabel entfallen. Auch wird der ästhetische Gesamteindruck eines derart geschmückten Christbaums erhöht, da keine sichtbaren Kabel mehr vorhanden sind.

Die Erfindung kann jedoch auch zur Imitation anderer Kerzen eingesetzt werden. Auch ist es denkbar, den erfindungsgemäßen Leuchtkörper überall dort einzusetzen, wo Flammen imitiert werden sollen. Zu denken ist hierbei beispielsweise an künstliche Kaminfeuer oder dergleichen.

Gemäß dem zweiten Aspekt der vorliegenden Erfindung wird ein Beleuchtungssystem bereitgestellt, das erfindungsgemäß durch einen oder mehrere wie vorstehend beschriebene erfindungsgemäße Leuchtkörper gekennzeichnet ist.

Das erfindungsgemäße Beleuchtungssystem hat den Vorteil, daß beliebig viele Leuchtkörper eingesetzt werden können, die auf einfache Weise unabhängig voneinander montiert werden können, und die auf ebenso einfache Weise unabhängig voneinander ein- beziehungsweise ausgeschaltet werden können. Zu den Vorteilen, Effekten, Wirkungen sowie der Funktionsweise des erfindungsgemäßen Beleuchtungssystems wird ebenfalls auf die vorstehenden Ausführungen zum erfindungsgemäßen Leuchtkörper vollinhaltlich Bezug genommen und hiermit verwiesen.

Bevorzugte Ausführungsformen des erfindungsgemäßen Beleuchtungssystems ergeben sich aus den Unteransprüchen.

Jeder Leuchtkörper kann wenigstens ein geeignetes Schalterelement aufweisen. Dabei ist es nicht unbedingt erforderlich, daß alle Leuchtkörper über den gleichen Schalterelementtyp verfügen.

Vorteilhaft kann/können der/die Leuchtkörper als Kerze ausgebildet sein, wobei das Beleuchtungssystem als Christbaumbeleuchtung ausgebildet ist. Die einzelnen Kerzen der Christbaumbeleuchtung können auf einfache Weise unabhängig voneinander im Christbaum positioniert werden. Dazu können die elektrischen Kerzen beispielsweise entsprechende Clipelemente oder dergleichen aufweisen. Da jede der Kerzen ihr eigenes System zur Erzeugung elektrischer Energie in sich trägt, kann das bisher erforderliche, alle elektrischen Kerzen verbindende Verbindungskabel entfallen. Dies erleichtert nicht nur die Montage der einzelnen Kerzen im Christbaum, sondern erhöht auch den ästhetischen Gesamteindruck des Christbaums. Auch das Auffinden defekter Kerzen wird erleichtert.

Wenn die einzelnen Leuchtkörper jeweils ein manuell zu betätigendes Schalterelement aufweisen, können die einzelnen Leuchtkörper separat und unabhängig voneinander durch Betätigung des jeweiligen Schalterelements einbeziehungsweise ausgeschaltet werden.

Es ist jedoch auch denkbar, daß eine Steuereinrichtung zum Ansteuern des oder der Leuchtkörper(s) vorgesehen ist. Vorteilhaft kann die Steuereinrichtung als in Bezug auf den/die Leuchtkörper externes Bauteil ausgebildet sein. Über eine solche Steuereinrichtung wird es bei entsprechender Auswahl der Schalterelemente in den Leuchtkörpern möglich, daß nicht jeder Leuchtkörper manuell ein- beziehungsweise ausgeschaltet werden muß. Vielmehr lassen sich alle im Beleuchtungssystem integrierten Leuchtkörper über eine einzige Steuereinrichtung ein- beziehungsweise ausschalten. Es ist jedoch auch möglich, daß die Steuereinrichtung in dem/den Leichtkörper(n) angeordnet ist.

Die Steuereinrichtung kann beispielsweise eine Fernbedienung aufweisen. Dies ist beispielsweise dann sinnvoll, wenn es sich bei den Schalterelementen um funkwellensensitive oder lichtsensitive (infrarot) Schalterelemente handelt. Über eine Betätigung der Fernbedienung können dann je nach Wunsch einzelne oder alle Leuchtkörper in beliebiger Reihenfolge und Weise ein- beziehungsweise ausgeschaltet werden.

Beispielsweise ist es auch denkbar, daß die Steuereinrichtung einen Computer aufweist, über den der/die Leuchtkörper ansteuerbar ist/sind oder angesteuert wird/werden. Über einen solchen Computer lassen sich die Leuchtkörper neben den vorstehend beschriebenen Möglichkeiten auch zeitlich gesteuert einbeziehungsweise ausschalten. Auch ist es möglich, daß die einzelnen Leuchtkörper des Beleuchtungssystems nach bestimmten Mustern ein- und ausgeschaltet werden, so daß - vorteilhaft individuell bestimmbare - Lichtspiele erzeugt werden können. In einer vorteilhaften Ausführungsform kann das Schalterelement des wenigstens einen Leuchtkörpers als funkwellensensitives Schalterelement ausgebildet sein, wobei in dem Leuchtkörper ein mit dem Schalterelement gekoppelter Empfänger zum Empfangen von Funkwellen vorgesehen ist. Weiterhin kann ein mit dem Empfänger korrespondierender Sender zum Aussenden von Funkwellen vorgesehen sein. Dieser Sender ist vorteilhaft mit der Steuereinrichtung gekoppelt. Ein derart ausgebildetes Beleuchtungssystem ermöglicht es auf sehr einfache Weise, einzelne Leuchtkörper des Beleuchtungssystems über eine einzige Steuereinrichtung, die vorzugsweise als externes Bauteil vorliegt, unabhängig voneinander und in jeder beliebigen Reihenfolge ein- beziehungsweise auszuschalten.

Die Erfindung wird nun an Hand von Ausführungsbeispielen unter Bezugnahme auf die beiliegende Zeichnung näher erläutert. Es zeigen:
Figur 1 einen als elektrische Kerze ausgebildeten Leuchtkörper gemäß der vorliegenden Erfindung; und
Figur 2 in schematischer Ansicht ein erfindungsgemäßes Beleuchtungssystem sowie eine vorteilhafte Einsatzmöglichkeit des erfindungsgemäßen Beleuchtungssystems.

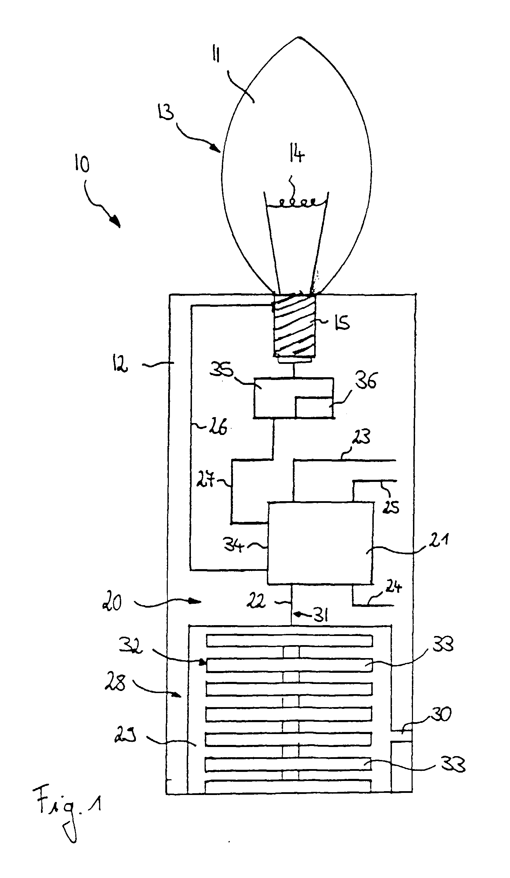

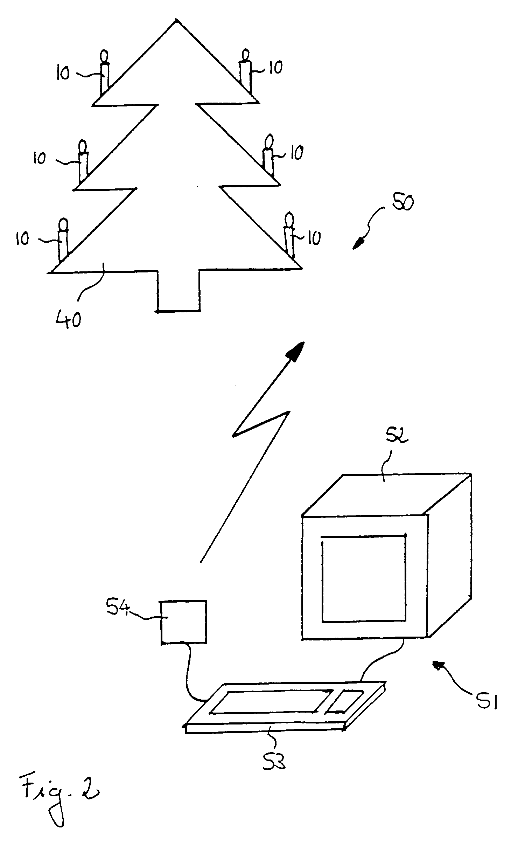

In Figur 1 ist ein als elektrische Kerze ausgebildeter Leuchtkörper 10 dargestellt. Der Leuchtkörper 10 ist Bestandteil eines in Figur 2 dargestellten Beleuchtungssystems 50, das als Beleuchtungssystem für einen Christbaum ausgebildet ist.

Die elektrische Kerze 10 weist einen Kerzenschaft 12 auf, in dem ein Brennstoffzellensystem 20 zur Erzeugung von elektrischer Energie angeordnet ist. Weiterhin weist die elektrische Kerze 10 eine Kerzenflamme 13 auf. Im vorliegenden Ausführungsbeispiel ist die Kerzenflamme 13 als Leuchtelement 11 in Form einer Glühbirne ausgebildet. Die Glühbirne 11 wird über ein Gewinde 15 in eine nicht dargestellte, im Kerzenschaft 12 vorgesehene Fassung eingeschraubt. Zum Leuchten weist die Glühbirne 11 einen Glühfaden 14 auf.

Das im Kerzenschaft 12 befindliche Brennstoffzellensystem 20 weist eine oder mehrere Brennstoffzellen 21 auf. Im vorliegenden Ausführungsbeispiel ist zur besseren Übersicht nur eine einzige Brennstoffzelle 21 dargestellt. Die Brennstoffzelle 21 kann vorteilhaft zylinderartig gewickelt sein, wodurch bei geringem Bauraum eine maximale Leistungsfähigkeit der Brennstoffzelle 21 erreicht wird. Die Brennstoffzelle 21 ist mit einer Brennstoffzuleitung 22 (im vorliegenden Fall wird als Brennstoff Wasserstoff eingesetzt) sowie einer Brennstoffableitung 23 verbunden. Weiterhin ist die Brennstoffzelle 21 mit einer Oxidationsmittelzuleitung 24 (im vorliegenden Fall dient als Oxidationsmittel Sauerstoff) sowie einer Oxidationsmittelableitung 25 verbunden. Die zylinderartig gewickelte Brennstoffzelle 21 befindet sich innerhalb einer äußeren, zylinderförmigen Hülse 34.

Die Brennstoffzelle 21 ist über elektrische Verbindungen 26, 27 mit der Glühbirne 11 verbunden. Dadurch entsteht ein elektrischer Kreis, der die Glühbirne 11 beim Betrieb der Brennstoffzelle 21 mit elektrischer Energie versorgt, so daß diese leuchten kann.

Um die Glühbirne 11 während des Betriebs des Brennstoffzellensystems 20 einbeziehungsweise ausschalten zu können, ohne daß das gesamte Brennstoffzellensystem 20 ein- oder ausgeschaltet werden müßte, ist in der elektrischen Verbindungsleitung 27 ein Schalterelement 35 vorgesehen. Im vorliegenden Ausführungsbeispiel handelt es sich bei dem Schalterelement 35 um ein funkwellensensitives Schalterelement. Natürlich sind auch andere

Ausgestaltungsformen für das Schalterelement 35 möglich. Um das Schalterelement 35 betätigen zu können, ist dieses mit einem Empfänger 36 zum Empfangen von Funkwellen gekoppelt. Wenn der Empfänger 36 entsprechende Funkwellen empfängt, werden diese Funkwellen in elektrische Signale umgewandelt, die dann das Schalterelement 35 in entsprechender Weise schalten. Dadurch kann die Glühbirne 11 entweder ein- oder ausgeschaltet werden.

Um die Brennstoffzelle 21 mit Brennstoff zu versorgen, ist weiterhin ein Brennstoffspeicher 28 vorgesehen. Der Brennstoffspeicher 28 weist einen Behälter 29 auf, der über eine Zuleitung 30 sowie eine Ableitung 31 verfügt. Über die Zuleitung 30 wird der Brennstoff, im vorliegenden Fall Wasserstoff, in den Brennstoffspeicher 31 eingespeist. Da Wasserstoff in der Regel unter Druck gespeichert wird, ist der Brennstoffspeicher 28 vorteilhaft als Druckbehälter 29 ausgebildet. Die Ableitung 31 des Brennstoffspeichers 28 ist mit der Brennstoffzuleitung 22 zur Brennstoffzelle 21 verbunden, um diese mit dem im Brennstoffspeicher 28 gespeicherten Wasserstoff zu versorgen.
Da der zur Aufnahme des Brennstoffzellensystems 20 zur Verfügung stehende Bauraum (der Kerzenschaft 12) sehr begrenzt ist, müssen die einzelnen Komponenten des Brennstoffzellensystems 20 möglichst klein ausgebildet werden. Das bedeutet, daß auch der Brennstoffspeicher 28 möglichst klein und platzsparend sein muß. Um die Speicherkapazität des Brennstoffspeichers 28 dennoch zu erhöhen, ist im Behälter 29 eine Feststoff-Füllung aus Carbon-Nanostrukturen 32 vorgesehen. Die Carbon-Nanostrukturen 32 sind in besonderer Weise geeignet, Wasserstoff zu speichern. Um die Speicherkapazität des Brennstoffspeichers 28 weiter zu erhöhen, sind die einzelnen Carbon-Nanostrukturen 32 zu Konglomeraten 33 mit gegenüber der Scheindichte der ursprünglich losen Teilchen der Carbon-Nanostrukturen 32 erhöhter Scheindichte verdichtet. Im vorliegenden Ausführungsbeispiel sind die Carbon-Nanostrukturen zu scheibenartigen Gebilden verdichtet. Insgesamt sind im Ausführungsbeispiel gemäß Figur 1 sieben scheibenartige Konglomerate 33 dargestellt.

Nachfolgend wird nun die Funktionsweise eines solches Leuchtkörpers, beziehungsweise einer solchen elektrischen Kerze 10, beschrieben. Während des Betriebs des Brennstoffzellensystems 20 wird in der Brennstoffzelle 21 aus Wasserstoff sowie aus Sauerstoff durch entsprechende Reaktionen Strom erzeugt. Dies ist im Rahmen der vorstehenden Beschreibung ausführlich erläutert worden. Der elektrische Strom wird dem als Glühbirne ausgebildeten Leuchtelement 11 zur Verfügung gestellt. Damit ist der Leuchtkörper 10 von einer externen Energiequelle unabhängig. Die zum Leuchten des Leuchtelements 11 erforderliche elektrische Energie wird innerhalb des Leuchtkörpers 10 selbst erzeugt.

Derart ausgebildete Leuchtkörper 10 sind in besonderer Weise geeignet, in einem Beleuchtungssystem 50 gemäß Figur 2 eingesetzt zu werden. Das Beleuchtungssystem 50 gemäß Figur 2 dient dazu, einen Christbaum 40 zu beleuchten. Dazu sind eine Reihe von als elektrische Kerzen ausgebildeten Leuchtkörpern 10 vorgesehen. Die elektrischen Kerzen 10 können auf einfache Weise unabhängig voneinander am Christbaum 40 befestigt werden. Die für Lichterketten bisher erforderlichen Verbindungskabel, die die in der Beschreibungseinleitung beschriebenen Nachteile aufwiesen, können im vorliegenden Fall entfallen. Das vereinfacht nicht nur die Befestigung der elektrischen Kerzen 10 am Christbaum, sondern steigert auch dessen ästhetischen Gesamteindruck.

Zur Ansteuerung der elektrischen Kerzen 10 ist eine Steuereinrichtung 51 vorgesehen. Die Steuereinrichtung 51 ist im vorliegenden Beispiel als externe Steuereinrichtung ausgebildet. Sie weist einen Computer mit einem Monitor 52 sowie einer Tastatur 53 auf. Weiterhin ist ein Sender 54 zum Aussenden von Funkwellen vorgesehen.

Das Ansteuern, beziehungsweise das Ein- und Ausschalten der elektrischen Kerzen 10 erfolgt nun auf folgende Weise. Über den Rechner, das heißt die Tastatur 53 und den Monitor 52 kann vom Bediener des Beleuchtungssystems 50 eingestellt werden, welche der elektrischen Kerzen 10 ein- oder ausgeschaltet werden soll, beziehungsweise in welcher Reihenfolge das Ein- oder Ausschalten der elektrischen Kerzen 10 erfolgen soll. Über den Sender 54 werden dann entsprechende Funksignale an die einzelnen elektrischen Kerzen 10 ausgesandt. Diese Signale werden von den mit den Schalterelementen 35 jeweils gekoppelten Empfängern 36 (siehe Figur 1) empfangen und in entsprechende elektrische Signale umgewandelt. Diese elektrischen Signale führen zu einer entsprechenden Schaltung der Schalterelemente 35, worüber die Glühbirnen 11 der elektrischen Kerzen 10 entweder ein- oder ausgeschaltet werden.

Wenn das Beleuchtungssystem 50 in Betrieb genommen wird, müssen die Brennstoffzellensysteme 20 der einzelnen elektrischen Kerzen 10 zunächst gestartet werden. Das bedeutet, daß auch die Brennstoffzellen 21 zunächst hochgefahren werden müssen, damit sie die erforderliche elektrische Leistung erzeugen beziehungsweise bereitstellen können. Dies erfolgt auf nicht näher beschriebene Weise und ist in der Beschreibung weiter oben in allgemeiner Form dargestellt worden.

Über das erfindungsgemäße Beleuchtungssystem 50 ist es möglich, verschiedenste Beleuchtungsvarianten und Lichtspiele für den Christbaum einzustellen. Beispielsweise kann in der Steuereinrichtung 51 weiterhin ein lichtsensitives Sensorelement, ein akustiksensitives Sensorelement oder ein Zeitschaltelement vorgesehen sein. Natürlich können diese einzelnen Elemente auch als entsprechend ausgebildete Schalterelemente 35 in den elektrischen Kerzen 10 selbst ausgebildet sein. Wenn die einzelnen Sensorelemente in der Steuereinrichtung 51 vorgesehen sind, kann die Steuereinrichtung 51 bei Empfang eines entsprechenden Signals dieses in ein Funksignal umwandeln, das dann über den Sender 54 an die Empfänger 36 der jeweiligen elektrischen Kerzen 10 ausgesandt wird.

### Bezugszeichenliste

- 10 =: Leuchtkörper (elektrische Kerze)
- 11 =: Leuchtelement (Glühbirne)
- 12 =: Kerzenschaft
- 13 =: Kerzenflamme
- 14 =: Glühfaden
- 15 =: Gewinde
- 20 =: Brennstoffzellensystem
- 21 =: Brennstoffzelle
- 22 =: Brennstoffzuleitung
- 23 =: Brennstoffableitung
- 24 =: Oxidationsmittelzuleitung
- 25 =: Oxidationsmittelableitung
- 26 =: elektrische Verbindungsleitung
- 27 =: elektrische Verbindungsleitung
- 28 =: Brennstoffspeicher
- 29 =: Behälter
- 30 =: Zuleitung
- 31 =: Ableitung
- 32 =: Carbon-Nanostrukturen
- 33 =: Konglomerat
- 34 =: äußere Hülse der Brennstoffzelle
- 35 =: Schalterelement (funkwellensensitiv)
- 36 =: Empfänger
- 40 =: Christbaum
- 50 =: Beleuchtungssystem
- 51 =: Steuereinrichtung
- 52 =: Monitor
- 53 =: Tastatur
- 54 =: Sender

## Patentansprüche

1. Leuchtkörper, mit einem Brennstoffzellensystem (20) zum Erzeugen elektrischer Energie und wenigstens einem mit dem Brennstoffzellensystem (20) elektrisch verbundenen Leuchtelement (11), wobei das Brennstoffzellensystem (20) wenigstens eine mit dem Leuchtelement (11) verbundene Brennstoffzelle (21) und einen, mit der wenigstens einen Brennstoffzelle (21) verbundenen Brennstoffspeicher (28) aufweist.

2. Leuchtkörper nach Anspruch 1, dadurch gekennzeichnet, daß der Brennstoffspeicher (28) als geschlossener Behälter (29) mit einer Zuleitung (30) und einer Ableitung (31) für den Brennstoff ausgebildet ist und daß der Brennstoffspeicher (28) insbesondere mit einer Feststoff-Füllung aus Carbon-Nanostrukturen (32) versehen ist.

3. Leuchtkörper nach Anspruch 2, dadurch gekennzeichnet, daß die Teilchen der Carbon-Nanostrukturen (32) zu größeren zusammenhängenden Konglomeraten (33) mit gegenüber der Scheindichte der ursprünglich losen Teilchen erhöhter Scheindichte verdichtet sind.

4. Leuchtkörper nach einem der Ansprüche 1 bis 3, dadurch gekennzeichnet, daß die wenigstens eine Brennstoffzelle (21) als zylinderartig gewickelte Brennstoffzelle ausgebildet ist.

5. Leuchtkörper nach einem der Ansprüche 1 bis 4, dadurch gekennzeichnet, daß das wenigstens eine Leuchtelement (11) als Licht-Emittierende-Diode (LED) oder als Glühbirne ausgebildet ist.

6. Leuchtkörper nach einem der Ansprüche 1 bis 5, dadurch gekennzeichnet, daß zum Ein- und Ausschalten des Leuchtelements (11) wenigstens ein Schalterelement (35) vorgesehen ist.

7. Leuchtkörper nach Anspruch 6, dadurch gekennzeichnet, daß das Schalterelement (35) als manuell zu betätigendes Schalterelement und/oder als funkwellensensitives Schalterelement und/oder als lichtsensitives Schalterelement und/oder als akustiksensitives Schalterelement und/oder als Zeitschalter ausgebildet ist.

8. Leuchtkörper nach einem der Ansprüche 1 bis 7, dadurch gekennzeichnet, daß der Leuchtkörper (10) in Form einer Kerze ausgebildet ist, daß das Brennstoffzellensystem (20) im Kerzenschaft (12) angeordnet ist und daß das Leuchtelement (11) in der oder als Kerzenflamme (13) ausgebildet ist.

9. Beleuchtungssystem, gekennzeichnet durch einen oder mehrere Leuchtkörper (10) nach einem der Ansprüche 1 bis 8.

10. Beleuchtungssystem nach Anspruch 9, dadurch gekennzeichnet, daß der/die Leuchtkörper (10) als Kerze ausgebildet ist/sind und daß das Beleuchtungssystem (50) insbesondere als Christbaumbeleuchtung ausgebildet ist.

11. Beleuchtungssystem nach Anspruch 9 oder 10, dadurch gekennzeichnet, daß eine Steuereinrichtung (51) zum Ansteuern des oder der Leuchtkörper(s) (10) vorgesehen ist und daß die Steuereinrichtung (51) insbesondere als in Bezug auf den/die Leuchtkörper (10) externes Bauteil ausgebildet ist.

12. Beleuchtungssystem nach Anspruch 11, dadurch gekennzeichnet, daß die Steuereinrichtung (51) einen Computer (52, 53) aufweist, über den der/die Leuchtkörper (10) ansteuerbar ist/sind oder angesteuert wird/werden.

13. Beleuchtungssystem nach Anspruch 11 oder 12, dadurch gekennzeichnet, daß das Schalterelement (35) des wenigstens einen Leuchtkörpers (10) als funkwellensensitives Schalterelement ausgebildet ist, daß in dem Leuchtkörper (10) ein mit dem Schalterelement (35) gekoppelter Empfänger (36) zum Empfangen von Funkwellen vorgesehen ist, daß weiterhin ein mit dem Empfänger (36) korrespondierender Sender (54) zum Aussenden von Funkwellen vorgesehen ist und daß der Sender (54) mit der Steuereinrichtung (51) gekoppelt ist.
